# EUROPEAN PATENT SPECIFICATION

(11) **EP 2 075 979 B1**
(45) Date of publication and mention of the grant of the patent: **14.08.2013**
(21) Application number: 07816588.3
(22) Date of filing: 17.10.2007
(51) Int. Cl.: H04L 29/06

(54) **METHOD FOR RELEASING THE CALL DURING THE MULTIMEDIA SERVICE INTERCONNECTING IN THE SEPARATED FRAMEWORK**
VERFAHREN ZUM FREIGEBEN DER VERBINDUNG WÄHREND DES MULTIMEDIADIENSTANSCHLUSSES IN DEM SEPARIERTEN RAHMEN
PROCÉDÉ PERMETTANT DE LIBÉRER UN APPEL AU COURS D'UN SERVICE MULTIMÉDIA RELIÉ À UN RÉSEAU SÉPARÉ

(30) Priority: 20.10.2006 CN 200610140282
(43) Date of publication of application: 01.07.2009
(73) Proprietor: Huawei Technologies Co., Ltd., Longgang District, Shenzhen Guangdong 518129 (CN)
(72) Inventor: WANG, Suihai, Shenzhen Guangdong 518129 (CN)
(74) Representative: Kreuz, Georg Maria
(86) International application number: PCT/CN2007/002974
(87) International publication number: WO 2008/049322

(56) References cited:
- CN-A- 1 553 667
- KR-A- 20040 088 135
- KR-A- 20060 037 122
- US-A1- 2003 161 297
- HUAWEI: "Procedure for H.245 termination at the MGCF" 21 August 2006 (2006-08-21), 3GPP DRAFT; C3-060401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , XP050031197 [retrieved on 2006-08-21] * the whole document *
- ITU-T STUDY GROUP 16: "ITU-T Recommendation H.323: Packet-based multimedia communications systems" 14 July 2003 (2003-07-14), ITU-T RECOMMENDATIONS, INTERNATIONAL TELECOMMENDATION UNION, GENEVA, CH, PAGE(S) COMPLETE , XP002402029 ISSN: 1680-3329 * page 122, line 13 - page 124, line 29 *
- CHEN J. AND XIAO P.: 'Realization of Interworking between H.323 and SIP in IP Multimedia Networks' TELECOMMUNICATION ENGINEERING no. 4, 2005, pages 181 - 184, XP008138075

## Description

### FIELD OF THE INVENTION

The present invention relates to communication field, more specifically, to releasing the call during interoperation of multimedia services under a bearer independent network.

### BACKGROUND

With the increasing demand for multimedia services, the multimedia communication system develops progressively. Currently, the existing multimedia communication system includes an H.324 network adopting H.324, H.245, H.233 protocols, etc., an H.323 network adopting H.323, H.225.0, H.245, RTP (Real-time Transport Protocol)/RTCP (Real-Time Transmission Control Protocol), etc., a SIP network adopting SIP (Session Initiated Protocol), SDP (Session Descriptor Protocol), RTP/RTCP, etc.

To accomplish the interworking of multimedia services among different multimedia communication systems, a media control device and a media processing device are usually provided to connect the bearer independent network having different multimedia communication systems. The media control device is generally adapted to complete call control, implement signaling interoperation and instruct the media processing device to operate multimedia resources. The media processing device provides multimedia resources and operates the multimedia resources according to the instruction from the media control device to implement the interworking of the multimedia services.

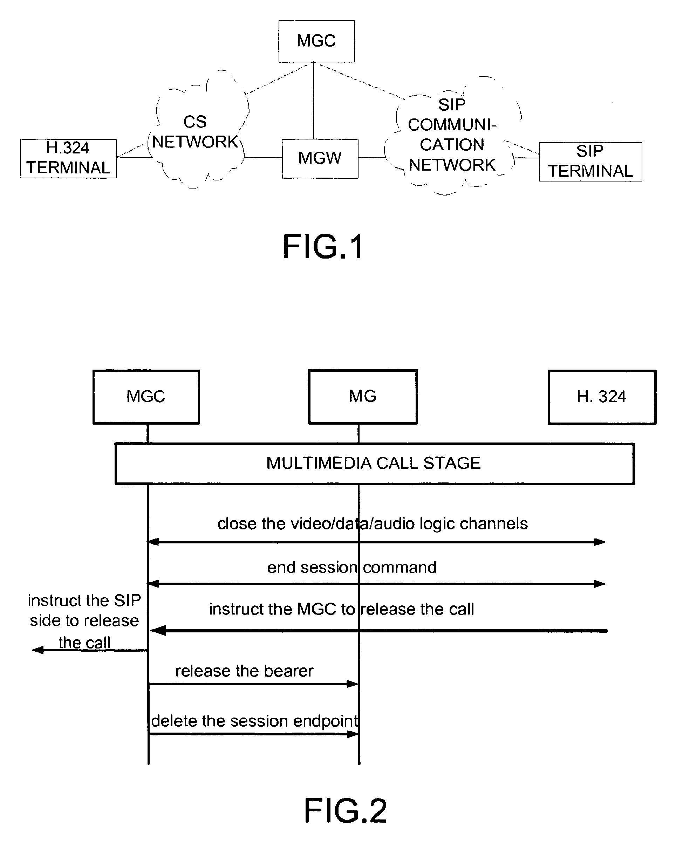

For instance, a system framework, constituted by H.324 network and SIP network, for implementing interoperation of the multimedia services, as illustrated in Figure 1, includes an H.324 terminal, an H.324 network constituted by CS network, a SIP network constituted by a SIP communication network and a SIP terminal, and a media control device MGC (Media Gateway Controller) as well as a media processing device MG (Media Gateway) disposed in the H.324 network and the SIP network.

Based on the framework as illustrated in Figure 1, the H.324 network and the SIP network implement the interoperation of the multimedia service through MGC and MG

When the H.324 network conducts H.245 interaction with the MGC and MG (H.245 interaction is used for interacting capability set and controlling the media stream), the H.245 can terminate at MGC or MG. When the H.245 ends at the MGC, all the H.245 messages are constructed and parsed at MGC. The MGC interacts with H.245 endpoint through MG. When the H.245 ends at MG, the MG may interact with H.245 endpoint directly or under the direction of MGC and may at the same time report the interaction result to the MGC.

When the H.324 network is interworking with the SIP network based on the aforementioned framework, the SIP network side determines the type of codec of SIP side through control plane signaling during call setup process. The MGC instructs the MG to set up the SIP bearer. Since the H.324 utilizes the H.245 protocol to control the media stream, the codec of H.324 network side may not be able to perform signaling negotiation through control plane. The H.324 network side needs to set up the bearer first, and then set up an H.245 connection between MG and H.324 session endpoint based on the H.245 protocol. That is, the H.245 session is used to complete the signaling negotiation process.

When the H.324 network is making a multimedia call with the SIP network through MGC and MG, the system may be invoked to release the multimedia call due to the following five reasons.
1. MG reports the release of the bearer of the H.324 network side.
2. H.324 terminal initiates a call release;
3. SIP network side initiates a call release;
4. MG reports the release of the bearer of the SIP network side.
5. MGC initiates a call release.

When releasing of the multimedia call is caused by the first reason, the H.245 session between the MG and the session endpoint in the H.324 network may not end normally. Therefore, a normal call release may not be achieved.

The prior art regarding the present invention provides a call release process in the case where the H.324 terminal initiates a call release. Two situations are illustrated below.

The first situation relates to the situation that the H.245 terminates at MGC, the call release process of which is illustrated in Figure 2. The H.324 network side first closes all the logic channels, and then transmits ESC (End Session Command) message to the MGC. After receiving the ESC message from the H.324 network side, the MGC closes all the video/audio/data logic channels and transmits an ESC message to the H.324 network side again. Then, the H.324 network side instructs the MGC to release the call. After the MGC receives an instruction (Bearer Independent Call Control) on call release from the H.324 network side or a REL (release) message from ISUP (Integrated Services User Part), the MGC instructs the SIP network side to release the call, and at the same time releases the bearer on the MG (with respect to IP/ATM bearer) and deletes the corresponding session endpoint.

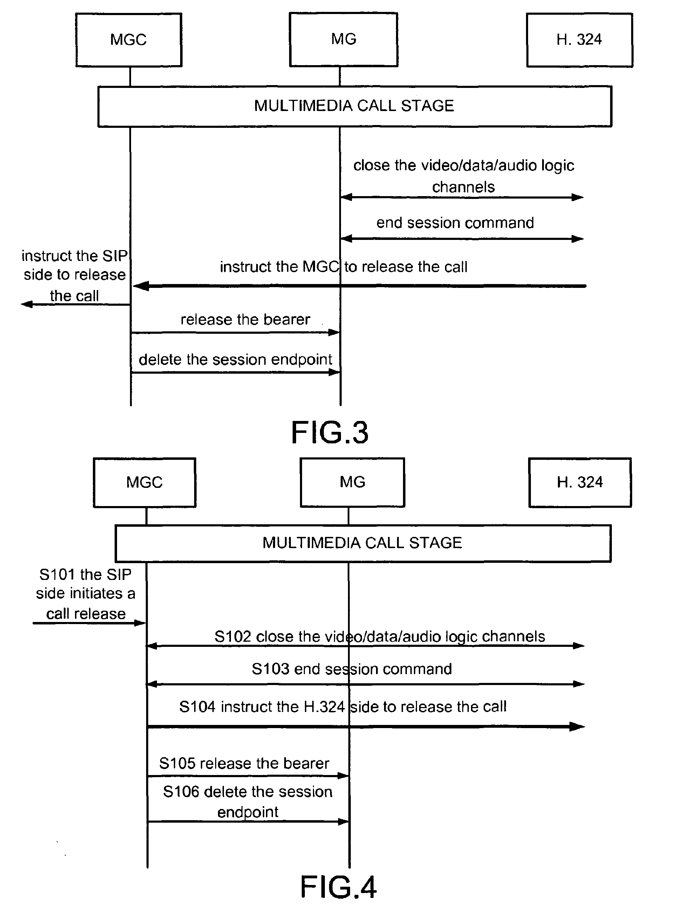

The second situation relates to the situation that the H.245 terminates at MG, the call release process of which is illustrated in Figure 3.

After the MG receives the ESC message from the H.324 network side, the MG closes all the video/audio/data logic channels and then sends the ESC message to the H.324 network side. Then, the H.324 network side instructs the MGC to release the call. After the MGC receives the instruction (REL message of BICC or ISUP) of call release from the H.324 network side, the MGC instructs the SIP network side to release the call and at the same time releases the bearer on the MG (with respect to IP/ATM bearer), and deletes the corresponding session endpoint.

According to the prior art, the inventor found that when the call release is initiated by the H.324 terminal, the H.324 network side would terminate the H.245 session on its own initiative. Consequently, a normal call release is ensured. However, with respect to the scenarios when the SIP network side initiates the call release, the MG reports the release of the bearer of the SIP network side, or the MGC initiates the call releases, the H.324 network side may not be able to terminate the H.245 session on its own initiative. Therefore, there is an instant need for some corresponding mechanism of terminating the H.245 at the first place when the call release is invoked for the above reasons. As such, the normal release of multimedia calls is ensured.

US 2003/0161297 A1 relates to an information processing apparatus which is installed in a DMZ and is connectable to an intranet and to an external network.

### SUMMARY

The present invention provides methods and systems for releasing call during interoperation of multimedia services in a bearer independent network. The present invention ensures to terminate the H.245 session at the first place when releasing multimedia call in the situation where the call release is invoked by a terminal at SIP side, or the call release is invoked by the MGC, or the call release is invoked by MG reporting the release of the bearer of the SIP side. Accordingly, the present invention ensures a normal release of the multimedia call and a prompt release of resources distributed to the H.324 network so as to avoid the waste of resources.

The embodiments of the present invention can be implemented according to the below technical solutions.

A method for releasing call during interoperation of the multimedia services in a bearer independent network, wherein a first network which does not employ H.245 protocol to control the media stream and a second network which employs H.245 protocol to control the media stream carry out multimedia services by using a media control device and a media processing device that have interoperation functionality, the method characterized in comprising:
terminating (S102; S201; S302; S403; S503; S602; S703) the H.245 session between the second network and the media processing device by using the media control device and the media processing device that have interoperation function when a call release is caused by side of the first network or the device having the interoperation function;
instructing (S105; S205; S306; S407; S511; S607; S708), by the media control device, the network which has not released the call to release the call, releasing corresponding bearer on the media processing device and deleting a corresponding session endpoint after confirming that the H.245 session has ended ;
wherein the device having the interoperation function is operable for implementing the interoperation of the multimedia services between the first network and the second network.

A system for releasing call during the interoperation of the multimedia services in a bearer independent network is provided according to an embodiment of the present invention. The system includes a first network which does not employ H.245 protocol to control the media stream, a second network which employs the H.245 protocol to control the media stream, and a media control device and a media processing device that have interoperation function. The device having the interoperation function is operable for implementing the interoperation of the multimedia services between the first network and the second network. The media control device having the interoperation function includes:
a first H.245 session end unit, configured to initiate a procedure of terminating an H.245 session between the second network and the media processing unit based on the H.245 protocol when the call release is caused by the first network side or the device having the interoperation function, and configured to terminate the H.245 session by relaying signalings resulted from the interaction with the H.245 session endpoint;
a first call release unit, configured to instruct the network side which has not released the call to release the call after confirming that the first H.245 session end unit has terminated the H.245 session, and configured to release corresponding bearer on the media processing unit and delete the corresponding session endpoint.

A media control device is provided according to an embodiment of the present invention. The media control device is operable for interworking multimedia services between a first network which does not employ H.245 protocol to control the media stream and a second network which employs H.245 protocol to control the media stream. The device includes:
a first H.245 session end unit, configured to initiate a procedure of terminating an H.245 session between the second network and the media processing unit based on the H.245 protocol when the call release is caused by side of the first network or the device having the interoperation function, and configured to terminate the H.245 session by relaying signalings resulted from the interaction with the H.245 session endpoint;
a first call release unit, configured to instruct the network side which has not released the call to release the call after confirming that the first H.245 session end unit has terminated the H.245 session, and configured to release corresponding bearer on the media processing unit and delete the corresponding session endpoint.

A media processing device is also provided according to an embodiment of the present invention. The media processing device communicates with a media control device based on H. 248 protocol. The device includes
a third H.245 session end unit first, configured to close the specified video logic channel, next the specified data logic channel and then the specified audio logic channel according to the instruction from the media control device. Lastly, the third H.245 session end unit transmits the ESC message to the H.245 session endpoint in the second network.
an information reporting unit, configured to confirm the termination of the H.245 session and report the information of the termination of the H.245 session to the media control device after the third H.245 session end unit has closed all the logic channels, transmitted the ESC message to the H.245 session endpoint and received the ESC message from an opposite end.

As can be seen from the foregoing embodiments of the present invention, the first network which does not employ H.245 protocol to control the media stream and the second network which employs H.245 protocol to control the media stream interoperate multimedia services by virtue of the media control device and the media processing device having interoperation functionality. When the call release is caused by the first network side or the device having interoperation function, the H.245 session between the second network and the media processing device can be terminated by virtue of the media control device and the media processing device having interoperation function. When confirming that the H.245 session has ended, the media control device instructs the network side which has not released the call to release the call, and releases the bearer on the media processing device and deletes the corresponding session endpoint. The present invention ensures to terminate the H.245 session when releasing multimedia call in the situation where the call release is invoked by a terminal at SIP side, or the call release is invoked by the MGC, or the call release is invoked by MG reporting the release of the bearer of the SIP side. Accordingly, the present invention ensures a normal release of the multimedia call and a prompt release of resources distributed to the H.324 network so as to avoid the waste of resources.

### BRIEF DESCRIPTION OF THE DRAWINGS

Figure 1 is a network framework for the interoperation of services between the H.324 network and the SIP network in the prior art;

Figure 2 is a flowchart of a call release in the instance where the call release is initiated by the H.324 terminal and the H.245 terminates on the MGC in the prior art;

Figure 3 is flowchart of a call release in the instance where the call release is initiated by the H.324 terminal and the H.245 terminates on the MG in the prior art;

Figure 4 is a flowchart of a call release in the instance where the H.245 terminates at the MGC and the call release is initiated by the SIP network side according to a first embodiment of the present invention;

Figure 5 is a flowchart of releasing a call in the instance where the H.245 terminates at the MGC and the call release is initiated by the MGC according to a second embodiment of the present invention;

Figure 6 is a flowchart of releasing a call in the instance where the H.245 terminates at the MGC and the MG reports the release of the bearer of the SIP network side according to a third embodiment of the present invention;

Figure 7 is a flowchart of releasing a call with one instruction for terminating the H.245 session in the instance where the H.245 terminates at the MG and the call release is initiated by the SIP network side according to a fourth embodiment of the present invention;

Figure 8 is a flowchart of releasing a call with multiple instructions for terminating the H.245 session in the instance where the H.245 terminates at the MG and the call release is initiated by the SIP network side according to a fifth embodiment of the present invention;

Figure 9 is a flowchart of releasing a call in the instance where the H.245 terminates at the MG and the call release is initiated by the MGC according to a sixth embodiment of the present invention;

Figure 10 is a flowchart of releasing a call in the instance where the H.245 terminates at the MG and the MG reports the release of the bearer of the SIP network side according to a seventh embodiment of the present invention;

Figure 11 is an illustration of a media control device according to a tenth embodiment of the present invention;

Figure 12 is an illustration of a media control device according to an eleventh embodiment of the present invention; and

Figure 13 is an illustration of a media processing device according to a twelfth embodiment of the present invention.

### DETAILED DESCRIPTION

According to embodiments of the present invention, in the instance where the call release is invoked by a first network side (e.g., a SIP network) which does not utilize the H.245 protocol to control the media stream, and if the H.245 terminates at a media control device (e.g., an MGC), the MGC may actively terminate the H.245 session between a second network side (e.g., an H.324 network or an H. 323 network) which controls the media stream using the H.245 protocol and the MG after receiving a BYE message from the first network side. In other words, the MGC first closes all the video/audio/data logic channels and then transmits an ESC message to the session endpoint in the second network side relating to the H.245 session. After the ESC message is received from the second network side, the second network side is instructed to release the call. Lastly, the bearer (with respect to IP/ATM connection) on the media processing device (e.g., an MG) is released and the corresponding session endpoint is deleted (or, the bearer on the media processing device is released and the corresponding session endpoint is deleted at the time when instructing the second network side to release the call.). If the H.245 terminates at the media processing device (e.g., an MG), the media control device (e.g., an MGC) terminates the H.245 session after receiving a BYE message from a first network side (e.g., a SIP network). In other words, the media control device may first instruct the media processing device (e.g., an MG) to terminate the H.245 session. After the media processing device receives the instruction, the media processing device may first close all the video/audio/data logic channels and then transmit an ESC message. After receiving the ESC message from a second network side (e.g., an H.324 network or H. 323 network) which controls the media stream by using the H.245 protocol, the media processing device reports the termination of the H.245 session to the media control device (e.g., anMGC). After the media control device (e.g., an MGC) receives the reports of the termination of the H.245 session from the media processing device (e.g., MG), the media control device instructs the second network side (e.g., H.324 network or H. 323 network) which controls the media stream by using the H.245 protocol to release the call. Lastly, the bearer (with respect to IP/ATM connection) on the media processing device (e.g., MG) is released and the corresponding session endpoint is deleted (or, the bearer on the media processing device is released and the corresponding session endpoint is deleted at the time when the media control device instructs the second network side to release the call.).

According to embodiments of the present invention, in the instance where the media control device (e.g., an MGC) initiates a call release or the media processing device (e.g., an MG) report the release of the bearer of a first network side (e.g., a SIP network) which does not utilize the H.245 protocol to control the media stream, and if the H.245 terminates at a media control device, the MGC actively would terminate the H.245 session. After the H.245 session is terminated, the media control device then instructs a second network side (e.g., an H.324 network or H. 323 network) which controls the media stream using the H.245 protocol and the first network side (e.g., a SIP network) which does not utilize the H.245 protocol to control the media stream to release the calls, and releases the bearer on the media processing device and deletes the corresponding session endpoint. If the H.245 terminates at the media processing device, the media control device needs to instruct the media processing device to terminate the H.245 session. After receiving the instruction, the media processing device first closes all the video/audio/data logic channels and transmits an ESC message to the session endpoint in a second network side (e.g., an H.324 network or an H. 323 network) which controls the media stream by using the H.245 protocol. And, the media processing device may report the termination of the H.245 session to the media control device after receiving the ESC message from the second network side. After the media control device learns that the H.245 session is terminated, the media control device instructs the second network side (e.g., an H.324 network or an H. 323 network) which controls the media stream using the H.245 protocol and the first network side (e.g., a SIP network) which does not utilize the H.245 protocol to control the media stream to release the call, and releases the bearer (with respect to IP/ATM connection) on the media processing device and deletes the corresponding session endpoint.

Embodiments of the present invention are given below in the example of the first network side which does not utilize the H.245 protocol to control the media stream and which is a SIP network and a second network side which controls the media stream using the H.245 protocol and which is an H.324 network.

A method for releasing call during the interoperation of the multimedia services under a bearer independent network is provided according to a first embodiment of the present invention. The method is focused on the situation where the H.245 terminates at the MGC and the call release is invoked by the SIP network side initiating the call release. According to the method, after the MGC receives a BYE message from the SIP network, the MGC first closes all the video/audio/data logic channels based on the H.245 protocol and then transmits an ESC message. After receiving the ESC message from the H.324 network side, the MGC instructs the H.324 side to release the call and lastly releases the bearer (with respect to IP/ATM connection) on the MG and deletes the corresponding session endpoint. The specific process, as illustrated in Figure 4, includes the following steps.

In step S101, the SIP network side initiates a call release via a BYE message.

After the MGC receives the BYE message from the SIP side, the MGC terminates the H.245 session based on the H.245 protocol, which is described below.

In step S102, the MGC closes all the logic channels based on the H.245 protocol.

The MGC transmits one or more message of closing the logic channel based on the H.245 protocol. The media processing device relays the message transmitted by the MGC to the H.245 session endpoint in the second network. When receiving the response from the H.245 session endpoint, the MGC confirms that the logic channel is closed.

When the MGC is closing the logic channels all the logic channels are closed in accordance with the sequence of first closing the video logic channel, then closing the data logic channel, and lastly closing the audio logic channel. Of course, when there exist video/audio logic channels only, the logic channels are closed in accordance with the sequence of first closing the video logic channel, then closing the data logic channel, and lastly closing the audio logic channel. After closing the video logic channel, the operation of closing the data logic channel can be skipped and the closing of the audio logic channel can be performed directly. With respect to other situations where the video/data/audio logic channels do not exist concurrently, the above processing manner is similar to the foregoing manner, which is omitted herein for brevity.

In step S103, after the MGC closes all the logic channels, the MGC transmits an ESC message and the media processing device relays the message to the session endpoint in the H.324 network. Then, the MGC waits for the ESC message from the session endpoint in the H.324 network.

In step S104, after receiving the ESC message, the MGC confirms that the H.245 has ended. Then, the MGC instructs the H.324 network to release the call.

The session endpoint in the H.324 network may transmit the ESC message and the MG relays the message to the MGC. After the MGC closes all the logic channels, transmits an ESC message, and receives the MSC message from the session endpoint in the H.324 network, the MGC confirms that the H.245 session has ended.

In step S105, the MGC releases the bearer on the MG (with respect to IP/ATM connection).

In step S106, the MGC deletes the corresponding session endpoint on the MG.

In the first embodiment of the present invention, step S105 of releasing the bearer on the MG can be performed while step S104 of instructing the H.324 network to release call is performed.

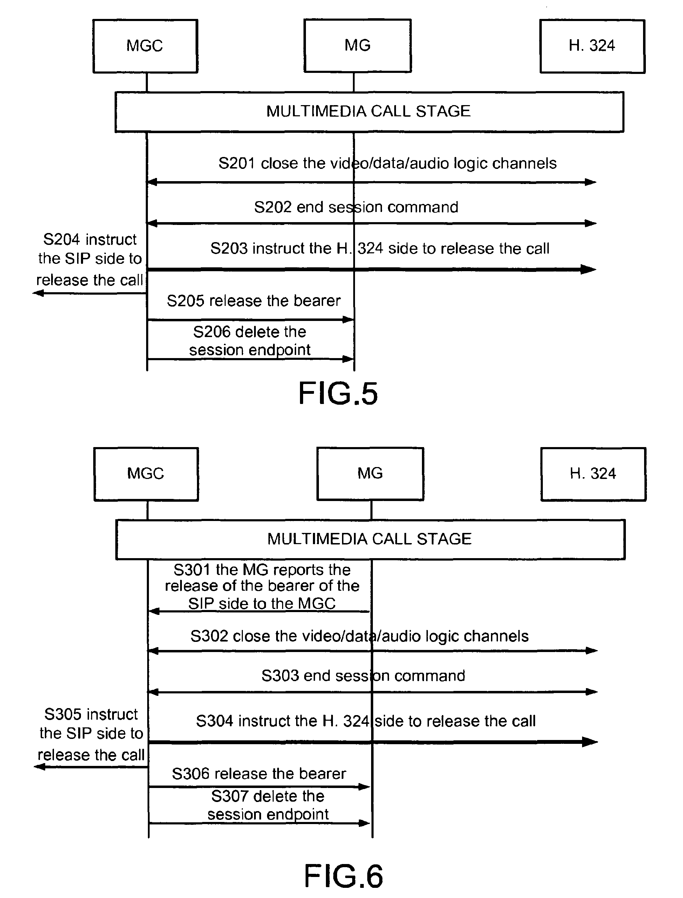

A second method for releasing call during the interoperation of the multimedia services under a bearer independent network is provided according to a second embodiment of the present invention. The method is focused on the situation where the H.245 terminates at the MGC and the call release is invoked by the MGC initiating the call release. According to the embodiment, The MGC initially closes all the video/audio/data logic channels based on the H.245 protocol and then transmits an ESC message. After receiving the ESC message from the H.324 network side, the MGC instructs the H.324 side to release the call and at the same time instructs the SIP side to release the call. Lastly, the MGC releases the bearer (with respect to IP/ATM connection) on the MG and deletes the corresponding session endpoint. The specific process, as illustrated in Figure 5, includes the following steps.

In step S201, the MGC closes all the logic channels based on the H.245 protocol.

The description of the implementation is similar to the related descriptions of the first embodiment, which is omitted herein for brevity.

In step S202, the MGC transmits an ESC message to the session endpoint in the H.324 network and then waits for the ESC message from the session endpoint in the H.324 network.

The description of the implementation is similar to the related descriptions of the first embodiment, which is omitted herein for brevity.

In step S203, after receiving the ESC message, the MGC confirms that the H.245 has ended. Then, the MGC instructs the H.324 network to release the call.

The description of MGC confirming the termination of H.245 session is similar to the related descriptions of the first embodiment, which is omitted herein for brevity.

In step S204, the MGC instructs the SIP side to release the call.

In step S205, the MGC releases the bearer on the MG (with respect to IP/ATM connection).

In step S206, the MGC deletes the corresponding session endpoint on the MG.

In the second embodiment of the present invention, step S204 of instructing the SIP side to release the call can be performed while step of S203 of instructing the H.324 network to release the call is performed. Alternatively, step S205 of releasing the bearer on the MG can be performed while step S204 of instructing the SIP side to release call is performed.

A third method for releasing call during the interoperation of the multimedia services under a bearer independent network is provided according to a third embodiment of the present invention. The method is focused on the situation where the H.245 terminates at the MGC and the call release is invoked by MG reporting the release of bearer of the SIP network side. According to the method, after the MGC receives from the MG the report of the release of the bearer of the SIP side, the MGC first closes all the video/audio/data logic channels based on the H.245 protocol and then transmits an ESC message. After receiving the ESC message from the H.324 network side, the MGC instructs the H.324 side to release the call and at the same time instructs the SIP side to release the call. Lastly, the MGC releases the bearer (with respect to IP/ATM connection) on the MG and deletes the corresponding session endpoint. The specific process, as illustrated in Figure 6, includes the following steps.

In step 301, the MG reports the release of the bearer of the SIP network side to the MGC.

In step S302, after the MGC receives from the MG the report of the release of the SIP bearer, the MGC closes all the logic channels based on the H.245 protocol.

The description of the implementation of closing all the logic channels based on the H.245 protocol is similar to the related description of the first embodiment, which is omitted herein for brevity.

In step S303, after the MGC closes all the logic channels, the MGC transmits an ESC message to the session endpoint in the H.324 network and then waits for the ESC message from the session endpoint in the H.324 network.

The description of the implementation is similar to the related descriptions of the first embodiment, which is omitted herein for brevity.

In step S304, after receiving the ESC message, the MGC confirms that the H.245 has ended. Then, the MGC instructs the H.324 network to release the call.

The description of MGC confirming the termination of H.245 session is similar to the related descriptions of the first embodiment, which is omitted herein for brevity.

In step S305, the MGC instructs the SIP side to release the call.

In step S306, the MGC releases the bearer on the MG (with respect to IP/ATM connection).

In step S307, the MGC deletes the corresponding session endpoint on the MG.

In the third embodiment of the present invention, step S305 of instructing the SIP side to release the call can be performed while step of S304 of instructing the H.324 network to release the call is being performed. Alternatively, step S306 of releasing the bearer on the MG can be performed while step S305 of instructing the SIP side to release call is performed.

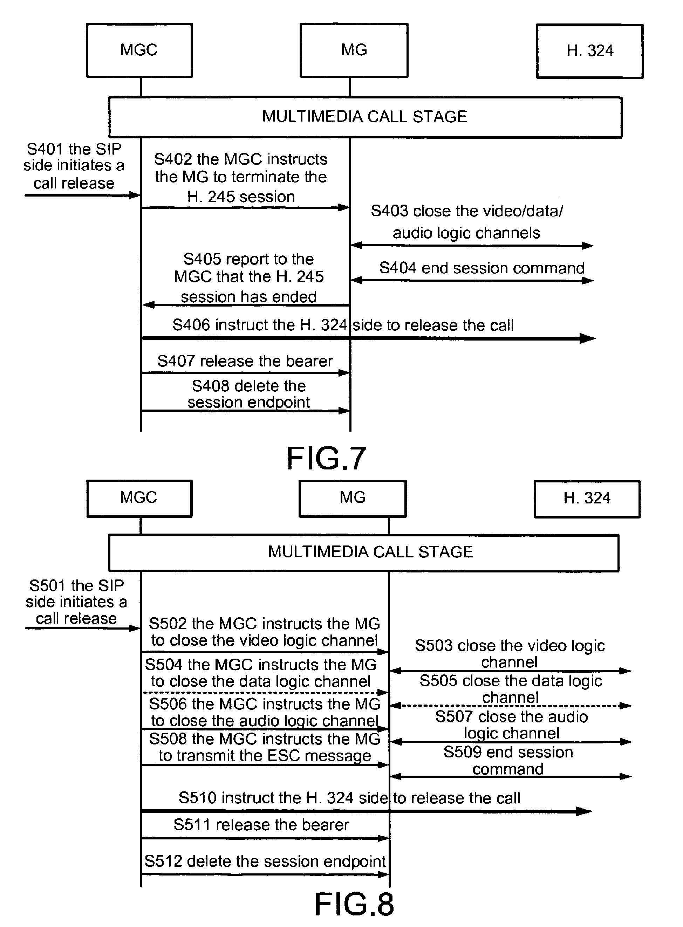

A fourth method for releasing call during the interoperation of the multimedia services under a bearer independent network is provided according to a fourth embodiment of the present invention. The method is focused on the situation where the H.245 terminates at the MG and the call release is invoked by the SIP network side initiating the call release. According to the method, after the MGC receives a BYE message from the SIP network, the MGC first instructs the MG to terminate the H.245 session based on H. 248 protocol. After MG receives the instruction, the MG first closes all the logic channels and then transmits an ESC message. After receiving the ESC message from the H.324 side, the MG reports the termination of the H.245 session to the MGC. After the MGC receives from the MG the report of the termination of the H.245 session, the MGC instructs the H.324 side to release the call and lastly releases the bearer (with respect to IP/ATM connection) on the MG and deletes the corresponding session endpoint. The specific process, as illustrated in Figure 7, includes the following steps.

In step S401, the SIP network side initiates a call release via a BYE message.

In step S402, after the MGC receives the BYE message from the SIP side, the MGC transmits an instruction message instructing the MG to terminate the H.245 session based on H. 248 protocol. The instruction message carries the information of terminating the H.245 session.

In step S403, according to the instruction from the MGC, the MG closes all the logic channels in accordance with the sequence of first closing the video logic channel, then closing the data logic channel, and lastly closing the audio logic channel.

After receiving the instruction message transmitted from the MGC, the MG transmits one or more messages of closing the logic channels based on the H.245 protocol. When receiving the response from the H.245 session endpoint, the MG confirms that the logic channels have been closed.

When the MG is closing the logic channels, all the logic channels are closed in accordance with the sequence of first closing the video logic channel, then closing the data logic channel, and lastly closing the audio logic channel. Of course, if there exist only video/audio logic channels, the logic channels are closed in accordance with the sequence of first closing the video logic channel, then closing the data logic channel, and lastly closing the audio logic channel. After closing the video logic channel, the operation of closing the data logic channel can be skipped and the closing of the audio logic channel can be performed directly. With respect to other situations where the video/data/audio logic paths do not exist concurrently, the processing manner is similar to the foregoing manner, which is omitted herein for brevity.

In step S404, after the MG closes all the logic channels, the MGC transmits an ESC message to the session endpoint in the H.324 network and then waits for the ESC message from the session endpoint in the H.324 network.

In step S405, after the MG receives the ESC message and the MG confirms that the H.245 session has ended, the MG reports the information of the termination of the H.245 session to the MGC.

After the MG closes all the logic channels, transmits an ESC message, and receives the MSC message from the session endpoint in the H.324 network, the MG confirms that the H.245 session has ended.

In step S406, after the MGC receives the reported information of the termination of the H.245 session, the MGC instructs the H.324 network to release the call.

In step S407, the MGC releases the bearer on the MG (with respect to IP/ATM connection).

In step S408, the MGC deletes the corresponding session endpoint on the MG.

In the fourth embodiment of the present invention, step S407 of releasing the bearer on the MG can be performed while step S406 of instructing the H.324 network to release the call is performed.

It can be seen from the fourth embodiment of the present invention, the MGC instructs the MG to terminate the H.245 session via an instruction message based on the H. 248 protocol. Apart from that, a second method may also be adopted by the MGC. That is, the object of terminating the H.245 is achieved by instructing the MG to close a specified logic channel via an instruction message based on the H. 248 protocol, or by transmitting an ESC message. The specific implementation is described below.

If a video logic channel exists, the MGC transmits one or more instruction messages to MG, instructing the MG to close the video logic channel, wherein the instruction message carries a signal instruction and a logic channel number to which the specified video logic channel corresponds. One might specify a logic channel number to which one video logic channel corresponds, or, specify logic channel numbers to which multiple video logic channels corresponds. According to this method, the MGC may instruct the MG to close all the video logic channels. When receiving the response from the MG, and if a data logic channel exists, the MGC may continue to transmit one or more instruction messages based on the H. 248 protocol, instructing the MG to close the data logic channel. Likewise, each instruction message carries one signal instruction and a logic channel number to which the specified data logic channel corresponds. When receiving the response from the MG and if an audio logic channel exists, the MGC may continue to transmit one or more instruction message based on the H. 248 protocol, instructing the MG to close the audio logic channels. Likewise, each instruction message carries one signal instruction and a logic channel number to which the specified audio logic channel corresponds. After receiving the response from the MG, the MGC may again transmit an instruction message to the MG, instructing the MG to transmit an ESC message to the session endpoint in the H.324 network.

After the MG receives the instruction message transmitted from the MGC, the MG completes the corresponding operations one by one according to the instruction. That is, the MG first closes the specified video logic channel, subsequently the specified data logic channel and then the specified audio logic channel. Lastly, the MG transmits the ESC message to the session endpoint in the H.324 network.

To implement the foregoing two methods, it is necessary to extend the H.245 package defined in the H. 248 protocol. The extended H.245 package mainly includes two signals: EndH.245Session and CloseSpecifiedLogicChannel, and an event H.245SessionEnded.

Signal EndH.245Session is primarily directed to the first method, which is used to instruct the MG to terminate the H.245 session between the MG and its opposite end. After the MG receives this signal, the MG may close all the logic channels of the MG and its opposite end before transmitting the ESC message.

Signal CloseSpecifiedLogicChannle is primarily directed to the second method, which is used to instruct the MG to close the specified logic channel. When this signal is used in the instruction message, it is also required to carry a corresponding logic channel number of the specified logic channel in the instruction message.

Event H.245SessionEnded is used to indicate that the H.245 session is ended.

When utilizing the second method, with respect to the situation where the H.245 terminates at the MG and the call release is invoked by the SIP network side initiating the call release, a fifth method for releasing call during the interoperation of the multimedia services under a bearer independent network is provided according to a third embodiment of the present invention. The implementation, as illustrated in Figure 8, includes the following steps.

In step S501, the SIP network side initiates a call release via a BYE message.

In step S502, after the MGC receives the BYE message from the SIP side, the MGC transmits at least one instruction message based on the H. 248 protocol, instructing the MG to close the video logic channel. Each instruction message carries a signal instruction and a logic channel number to which the specified video logic channel corresponds.

One might specify a logic channel number to which one video logic channel corresponds, or, specify logic channel numbers to which multiple video logic channels corresponds.

In step S503, the MG closes the corresponding video logic channel according to the instruction from the MGC.

After the MG receives the instruction message from the MGC, the MG transmits the message of closing the video logic channel to the H.245 session endpoint in the H.324 network side. The H.245 session endpoint in the H.324 network side may close the corresponding video logic channel according to the message.

In step S504, after the MGC closes all the video logic channels, the MGC transmits at least one instruction message based on H. 248 protocol, instructing the MG to close the data logic channels, wherein each instruction message carries a signal instruction and a logic channel number to which the specified data logic channel corresponds.

One might specify a logic channel number to which one data logic channel corresponds, or, specify logic channel numbers to which multiple data logic channels corresponds.

In step S505, the MG closes the corresponding data logic channel according to the instruction from the MGC.

After the MG receives the instruction message from the MGC, the MG transmits the message of closing the data logic channel to the H.245 session endpoint in the H.324 network side. The H.245 session endpoint in the H.324 network side may close the corresponding data logic channel according to the message.

In step S506, after the MGC closes all the data logic channels, the MGC transmits at least one instruction message based on H. 248 protocol, instructing the MG to close the audio logic channels, wherein each instruction message carries a signal instruction and a logic channel number corresponding to the specified audio logic channel.

One might specify a logic channel number corresponding to one audio logic channel, or, specify logic channel numbers corresponding to multiple audio logic channels.

In step S507, the MG closes the corresponding audio logic channel according to the instruction from the MGC.

After the MG receives the instruction message from the MGC, the MG transmits the message of closing the audio logic channel to the H.245 session endpoint in the H.324 network side. The H.245 session endpoint in the H.324 network side may close the corresponding audio logic channel according to the message.

In the process of performing the step S502 and the step S507, if any one of the video logic channel, data logic channel or audio logic channel does not exist, the corresponding step will no longer be performed. As for the absence of video logic channel, after step S501 is performed, step S502 and S503 will no longer be performed.

In step S508, after the MGC closes all the logic channels, the MGC transmits an instruction message based on H. 248 protocol, instructing the MG to transmit the ESC message.

In step S509, the MGC transmits an ESC message to the session endpoint in the H.324 network according to the instruction from the MGC and then waits for the ESC message from the session endpoint in the H.324 network.

After the MG receives the ESC message and the MG confirms that the H.245 session has ended, the MG reports the information of the termination of the H.245 session to the MGC.

The description of MG confirming the termination of H.245 session is similar to the related descriptions of step S405 in fourth embodiment, which is omitted herein for brevity.

In step S510, after the MGC receives the reported information indicating that the H.245 session has ended, the MGC instructs the H.324 network to release the call.

In step S511, the MGC releases the bearer on the MG (with respect to IP/ATM connection).

In step S512, the MGC deletes the corresponding session endpoint on the MG.

In the fifth embodiment of the present invention, step S512 of releasing the bearer on the MG can be performed while step S511 of instructing the H.324 network to release the call is performed.

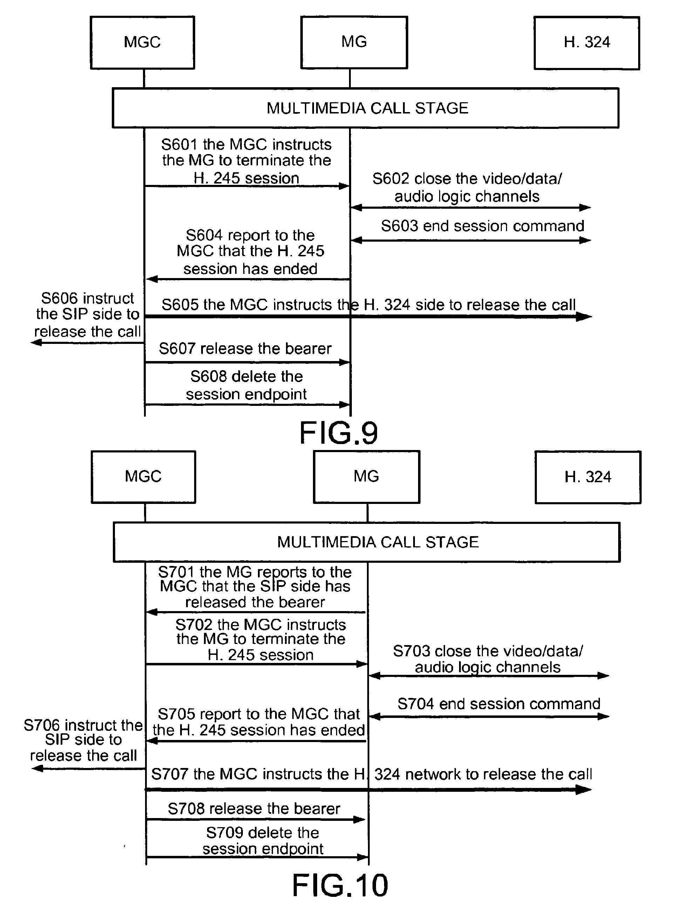

A sixth method for releasing call during the interoperation of the multimedia services under a bearer independent network is provided according to a sixth embodiment of the present invention. The method is focused on the situation where the H.245 terminates at the MG and the call release is invoked by the MGC initiating the call release. According to the method, the MGC initially instructs the MG to terminate H.245 session. After the MG receives the instruction, the MG first instructs the MG to terminate the H.245 session based on H. 248 protocol. After MG receives the instruction, the MG first closes all the video/data/audio logic channels and then transmits an ESC message. After receiving the ESC message from the H.324 side, the MG reports the termination of the H.245 session to the MGC. After the MGC receives from the MG the report of the termination of the H.245 session, the MGC instructs the H.324 side to release the call and lastly releases the bearer (with respect to IP/ATM connection) on the MG and deletes the corresponding session endpoint. The implementation, as illustrated in Figure 9, includes the following steps.

In step S601, the MGC transmits an instruction message based on the H. 248 to the MG. The instruction message carries the information of terminating the H.245 session.

In step S602, according to the instruction from the MGC, the MG closes all the logic channels in accordance with the sequence of first closing the video logic channel, then closing the data logic channel, and lastly closing the audio logic channel.

The description of the specific implementation is similar to the related descriptions of step S403 in the fourth embodiment, which is omitted herein for brevity.

In step S603, after the MG closes all the logic channels, the MG transmits an ESC message to the session endpoint in the H.324 network and then waits for the ESC message from the session endpoint in the H.324 network.

In step S604, after the MG receives the ESC message and the MG confirms that the H.245 session has ended, the MG reports to the MGC that the H.245 session has ended.

The description of MG confirming the termination of H.245 session is similar to the related descriptions of step S405 in fourth embodiment, which is omitted herein for brevity.

In step S605, after the MGC receives the reported information of the termination of the H.245 session, the MGC instructs the H.324 network to release the call.

In step S606, the MGC instructs the SIP side to release the call.

In step S807, the MGC releases the bearer on the MG (with respect to IP/ATM connection).

In step S608, the MGC deletes the corresponding session endpoint on the MG.

In the sixth embodiment of the present invention, step S606 of instructing the SIP side to release the call can be performed while step of S605 of instructing the H.324 network side to release the call is being performed. Alternatively, step S607 of releasing the bearer on the MG can be performed while step S606 of instructing the SIP side to release call is being performed.

In the sixth embodiment, one instruction message is used to instruct the MG to terminate the H.245 session. Of course, a second method for instruction may also be employed. Every transmitted instruction message contains instruction for closing the specified logic channel, or instruction for transmitting ESC message, or instruction for instructing MG to terminate H.245 session. The implementation is similar to that of embodiment five according to the present invention, which is omitted herein for brevity.

A seventh method for releasing call during the interoperation of the multimedia services under a bearer independent network is provided according to a seventh embodiment of the present invention. The method is focused on the situation where the H.245 terminates at the MG and the call release is invoked by MG reporting the release of bearer of the SIP network side. According to the method, after the MGC receives from the MG the report of the release of the bearer of the SIP side, the MGC first instructs the MG to terminate H.245 session. After receiving the instruction, the MG first closes all the logic channels and then transmits an ESC message. After the MG receives the ESC message from the H.324 network side, the MG reports to the MGC that the H.245 session has ended. After the MGC receives the report of the termination of the H.245 session, the H.324 then instructs the H.324 side to release the call and at the same time instructs the SIP side to release the call. Lastly, the MGC releases the bearer (with respect to IP/ATM connection) on the MG and deletes the corresponding session endpoint. The implementation, as illustrated in Figure 10, includes the following steps.

In step S701, the MG reports to the MGC that the SIP network side has released the bearer.

In step S702, the MGC transmits an instruction message based on the H. 248 protocol to the MG. The instruction message carries the information of instructing the MG to terminate the H.245 session.

In step S703, according to the instruction from the MGC, the MG closes all the logic channels in accordance with the sequence of first closing the video logic channel, then closing the data logic channel, and lastly closing the audio logic channel.

The description of the specific implementation is similar to the related descriptions of step S403 in the fourth embodiment, which is omitted herein for brevity.

In step S704, after the MG closes all the logic channels, the MG transmits an ESC message to the session endpoint in the H.324 network and then waits for the ESC message from the session endpoint in the H.324 network.

In step S705, after the MG receives the ESC message and the MG confirms that the H.245 session has ended, the MG reports to the MGC that the H.245 session has ended.

The description of MG confirming the termination of H.245 session is similar to the related descriptions of step S405 in fourth embodiment, which is omitted herein for brevity.

In step S706, after the MGC receives the information of the termination of the H.245 session reported from the MG, the MGC instructs the SIP side to release the call.

In step S707, the MGC instructs the H.324 network to release the call.

In step S708, the MGC releases the bearer on the MG (with respect to IP/ATM connection).

In step S709, the MGC deletes the corresponding session endpoint on the MG.

In the seventh embodiment of the present invention, step S707 of instructing the H.324 network side to release the call can be performed while step of S706 of instructing the SIP side to release the call is performed. Alternatively, step S708 of releasing the bearer on the MG can be performed while step S707 of instructing the H.324 network side to release call is performed.

In the seventh embodiment, one instruction message is used to instruct the MG to terminate the H.245 session. Of course, a second method for instruction may also be employed. Every transmitted instruction message contains instruction for closing the specified logic channel, or instruction for transmitting ESC message, or instruction for instructing MG to terminate H.245 session. The implementation is similar to that of embodiment five according to the present invention, which is omitted herein for brevity.

In the foregoing embodiments, the message which is employed when the MGC instructs the H.324 side to release the call and the H.324 side instructs the MGC to release the call, includes, but not limited to, REL message of BICC or ISUP.

The foregoing embodiments are illustrated in the example of the first network side which does not employ the H.245 protocol to control the media stream and which is a SIP network and a second network side which employ the H.245 protocol to control the media stream an which is an H.324 network. However, application of the embodiments of the present invention is not limited to a system for implementing multimedia services under the framework where the SIP network is separated from the H.324 network. These embodiments may be applicable to any system network for implementing multimedia services under the framework where the network which does not employ the H.245 protocol to control the media stream is separated from the network which employs the H.245 protocol to control the media stream.

A system for releasing call during the interoperation of the multimedia services under a bearer independent network is provided according to an eighth embodiment of the present invention. The system includes a first network which does not employ the H.245 protocol to control the media stream, a second network which employs the H.245 protocol to control the media stream, and a media control device and a media processing device having interoperation function. The device having the interoperation function is operable for implementing the interoperation of the multimedia services between the first network and the second network. The media control device having the interoperation function includes a first H.245 session end unit and a first call release unit.

When the call release is caused by the first network side or the device having the interoperation function, the first H.245 session end unit initiates a procedure of terminating the H.245 session between the second network and the media processing device based on H.245 protocol and the media processing device relays the transmitted signaling for terminating the H.245 session, i.e., releasing all the video/audio/data logic channels, and then transmits an ESC message to the session endpoint in the second network. When the first H.245 connect and release unit receives the ESC message transmitted from the session endpoint in the second network, the first H.245 connect and release unit confirms that the H.245 session has ended and then notifies the first call release unit. After the first call release unit is informed of the termination of the H.245 session, the first call release unit instructs the network side which has not released the call to release call and then (or at the same time) releases the corresponding bearer on the media processing device and deletes the corresponding session endpoint. The description of the implementation is similar to the related descriptions of method embodiment, which is omitted herein for brevity.

Another system for releasing call during the interoperation of the multimedia services under a bearer independent network is provided according to a ninth embodiment of the present invention. The system includes a first network which does not employ H.245 protocol to control the media stream, a second network which employs the H.245 protocol to control the media stream, and a media control device and a media processing device having interoperation function. The device having the interoperation function is operable for implementing the interoperation of the multimedia services between the first network and the second network. The media control device having the interoperation function includes an instruction unit and a second call release unit. The media processing device includes a second H.245 session end unit. When the call release is caused by the first network side which does not employ H.245 protocol to control the media stream or the device having interoperation function, the instruction unit instructs the media processing device based on the H. 248 protocol to release the H.245 session between the second network and media processing device. The implementation includes two instruction methods. The first method is to instruct the media processing device to terminate the H.245 session between the second network and the media processing device via one instruction message. The instruction message carries instruction for terminating the H.245 session. The description of the implementation is similar to the related descriptions of method embodiment, and is omitted herein for brevity. The second method is to instruct media processing device to release all the logic channels via a plurality of instruction messages, wherein each instruction message carries instruction instructing the media processing device to close the specified logic channel(s) and one or more corresponding logic channel number(s). With these instruction messages, the instruction unit may first instruct the media processing device to close the specified video logic channel and then instruct the media processing device to close the specified data logic channel and subsequently instruct the media processing device to close the specified audio logic channel. Lastly, an instruction message is used to instruct the media processing device to transmit an ESC message to the opposite end of the session. The description of the implementation is similar to the related descriptions of method embodiment, which is omitted herein for brevity.

According to the instruction from the media control device, the second H.245 session endpoint unit in the media processing device first closes the specified video logic channel, next closes the specified data logic channel, and then close the specified audio logic channel. When all the video/data/audio logic channels have been closed, the second H.245 session end unit transmits the ESC message to the H.245 session endpoint in the second network side. When receiving the ESC message transmitted from the H.245 session endpoint, the second H.245 session end unit confirms the termination of the H.245 session and reports the information of the termination of the H.245 session to the media control device. The description of the implementation is similar to the related descriptions of method embodiment, which is omitted herein for brevity.

After the second call release unit in the media control device receives the information reported by the media processing device, the second call release unit instructs the network side which has not released the call to release the call, and, then (or at the same time), releases the bearer on the media processing device and deletes the corresponding session endpoint. The description of the implementation is similar to the related descriptions of method embodiment, which is omitted herein for brevity.

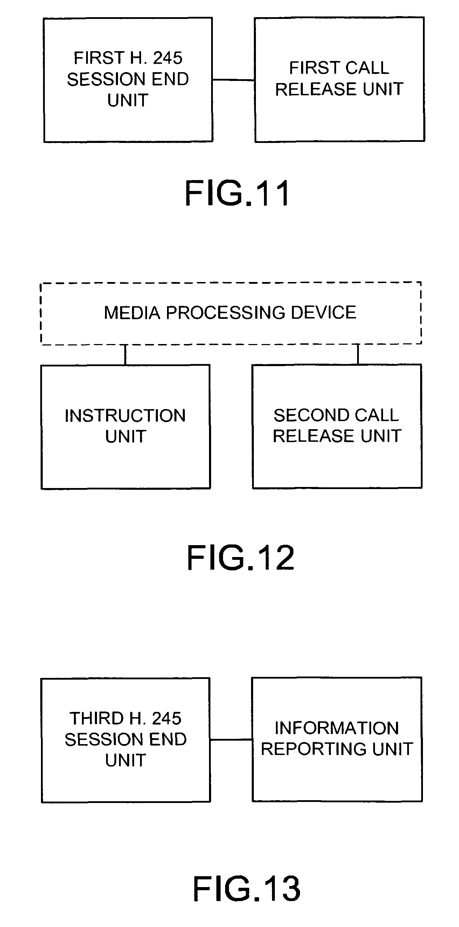

A media control device is provided according to a tenth embodiment of the present invention. The media control device is operable for interworking multimedia services between the first network which does not employ the H.245 protocol to control the media stream and the second network which employs the H.245 protocol to control the media stream. The structure of the device, as illustrated in Figure 11, includes a first H.245 session end unit and a first call release unit.

When the call release is caused by the first network side or the device having the interoperation function, the first H.245 session end unit initiates a procedure of terminating the H.245 session between the second network and the media processing device based on H.245 protocol and the media processing device relays the signaling interacting with H.245 session endpoint for terminating the H.245 session. When the first H.245 session end unit confirms that the H.245 session has ended. The H.245 session end unit notifies the first call release unit of the termination of the H.245 session. The first call release unit instructs the network side which has not released the call to release call and then (or at the same time) releases the corresponding bearer on the media processing device and deletes the corresponding session endpoint. The implementation of terminating the H.245 session and the implementation of confirming the termination of the H.245 session are similar to the related part described in the method embodiment, which are omitted herein for brevity.

Another media control device is provided according to an eleventh embodiment of the present invention. The media control device is operable for interworking multimedia services between the first network which does not employ the H.245 protocol to control the media stream and the second network which employs the H.245 protocol to control the media stream. The structure of the device, as illustrated in Figure 12, includes an instruction unit and a second call release unit.

When the call release is caused by the first network side or the device having the interoperation function, the instruction unit instructs the media processing device to terminate the H.245 session between the second network and the media processing device based on H. 248 protocol. Specifically, the implementation includes two scenarios.

SCENARIO ONE: When the call release is caused by the first network side or the device having the interoperation function, the instruction unit transmits an instruction message to the media processing device based on the H. 248 protocol. The instruction message carries information of instructing the media processing device to terminate the H.245 session. The description of the instructing manner is similar to the related descriptions of method embodiment, which is omitted herein for brevity.

SCENARIO TWO: When the call release is caused by the first network side or the device having the interoperation function, the second instruction sub-unit instructs the media processing device to close all the logic channels by transmitting an instruction message carrying information of closing the specified logic channel based on H. 248 protocol. After receiving the response from the media processing unit, the second instruction sub-unit transmits an instruction message, instructing the media processing device to transmit an ESC message to the H.245 session endpoint in the second network. The description of the instructing manner is similar to the related descriptions of method embodiment, which is omitted herein for brevity.

After receiving information of the termination of the H.245 session reported by the media processing device, the second call release unit instructs the network side which has not released the call to release the call, and, then (or at the same time), releases the bearer on the media processing device and deletes the corresponding session endpoint.

A media processing device is provided according to a twelfth embodiment of the present invention. The media processing device communicates with the media control device based on the H. 248 protocol. The structure of the media processing device, as illustrated in Figure 13, includes a third H.245 session end unit and an information reporting unit.

The third H.245 session end unit first closes the specified video logic channel, next the specified data logic channel and then the specified audio logic channel. Lastly, the third H.245 session end unit transmits the ESC message to the H.245 session endpoint in the second network. After the media processing device closes all the logic channels, the media processing device transmits ESC message to the H.245 session endpoint. The description of the implementation is similar to the related descriptions of method embodiment, which is omitted herein for brevity.

After the third H.245 session end unit closes all the logic channels, transmits the ESC message to the H.245 session endpoint and receives the ESC message from the opposite end, the third H.245 session end unit confirms that the H.245 session has ended and triggers the information reporting unit. The information reporting unit reports the information indicating the termination of the H.245 session to the media control device. The description of the implementation is similar to the related descriptions of method embodiment, which is omitted herein for brevity.

As can be seen from the foregoing embodiments of the present invention, the first network which does not employ the H.245 protocol to control the media stream and the second network which employs the H.245 protocol to control the media stream to carry out multimedia services by virtue of the media control device and the media processing device having interoperation functionality. When the call release is caused by the first network side or the device having interoperation functionality, the H.245 session between the second network and the media processing device can be terminated by virtue of the media control device and the media processing device having interoperation functionality. When confirming that the H.245 session has ended, the media control device instructs the network side which has not released the call to release the call, then (or, at the same time) releases the bearer on the media processing device and deletes the corresponding session endpoint. The present invention ensures to terminate the H.245 session when releasing multimedia call in the situation where the call release is invoked by a terminal at SIP side, or the call release is invoked by the MGC, or the call release is invoked by MG reporting the release of the bearer of the SIP side. Accordingly, the present invention ensures a normal release of the multimedia call and a prompt release of resources distributed to the H.324 network so as to avoid the waste of resources.

In addition, according to one embodiment of the present invention, the H.245 session can be terminated when releasing the multimedia call by instructing the media processing device to transmit an ESC message after instructing the media processing device to close a specific logic channel.

## Claims

1. A method for releasing call during interoperation of multimedia services in a bearer independent network, wherein a first network which does not employ H.245 protocol to control a media stream and a second network which employs H.245 protocol to control the media stream carry out multimedia services by using a media control device and a media processing device that have interoperation functionality, the method **characterized in** comprising:
terminating (S102; S201; S302; S403; S503; S602; S703) H.245 session between the second network and the media processing device by using the media control device and the media processing device that have an interoperation function when a call release is caused by side of the first network or one of the devices having the interoperation function;
instructing (S105; S205; S306; S407; S511; S607; S708), by the media control device, the network which has not released the call to release the call, releasing corresponding bearer on the media processing device and deleting a corresponding session endpoint after confirming that the H.245 session has ended ;
wherein a device having the interoperation function is operable for implementing the interoperation of the multimedia services between the first network and the second network.

2. The method of claim 1, **characterized in** further comprising:
initiating (S103), by the media control device having the interoperation function, a procedure of terminating the H.245 session between the second network and the media processing device based on H.245 protocol when the call release is invoked by the first network initiating the call release;
terminating the H.245 session, by the media processing device relaying signalings resulted from the interaction with an H.245 session endpoint in the second network;
instructing (S104) the second network to release the call, releasing the bearer on the media processing device and deleting the corresponding session endpoint after confirming that the H.245 session has ended.

3. The method of claim 1, **characterized in** further comprising:
initiating (S201;S302), by the media control device having the interoperation function, a procedure of terminating the H.245 session between the second network and the media processing device based on H.245 protocol when the call release is caused by the media control device initiating the call release or the media processing device reporting the release of the bearer of the side of the first network;
terminating (S202) the H.245 session, by the media processing device relaying signalings resulted from the interaction with an H.245 session endpoint in the second network;
instructing (S203; S204) the first network and the second network to release the call, releasing the bearer on the media processing device and deleting the corresponding session endpoint after confirming that the H.245 session has ended.

4. The method of claim 2 or 3, **characterized in that,** the process of initiating, by the media control device having the interoperation function, a procedure of terminating the H.245 session between the second network and the media processing device based on H.245 protocol and terminating the H.245 session, by the media processing device relaying signalings resulted from the interaction with an H.245 session endpoint in the second network further comprises:
transmitting (S201;S302), by the media control device having interoperation function, one or more messages of closing channel based on H.245 protocol; relaying, by the media processing device, the messages transmitted from the media control device to the H.245 session endpoint in the second network; after receiving a response from the H.245 session endpoint, transmitting an end session command, IESC, message; relaying, by the media processing device, the ESC message to the H.245 session endpoint in the second network;
determining (S203; S304), by the media control device that the H.245 session is terminated when the media controlling device receives an ESC message from the H.245 session endpoint in the second network.

5. The method of claim 1, **characterized in** further comprising:
instructing (S402; S502), by the media control device having the interoperation function, the media processing device to terminate the H.245 session between the second network and the media processing device based on H. 248 protocol when the call release is caused by the side of the first network initiating the call release;
terminating (S405; S509) the H.245 session by the media processing device according to instruction and reporting the information of the termination of the H.245 session to the media control device after confirming the H.245 session has ended;
instructing (S406; S510) the second network to release the call, and releasing the bearer on the media processing device and deleting the corresponding session endpoint after the media control device receives the reported information.

6. The method of claim 1, **characterized in** further comprising:
instructing (S601; S702), by the media control device having the interoperation function, the media processing device to terminate the H.245 session between the second network and the media processing device based on H. 248 protocol when the call release is caused by media control device initiating the call release or the media processing device reporting the release of the bearer of the side of the first network;
terminating (S602; S703) the H.245 session by the media processing device according to the instruction and reporting the information of the termination of the H.245 session to the media control device after confirming the H.245 session has ended;
instructing (S605; S606; S706; S707) the first network and the second network to release the call, releasing the bearer on the media processing device and deleting the corresponding session endpoint after the media control device receives reported information.

7. The method of claim 5 or 6, **characterized in that,** the process of instructing, by the media control device having the interoperation function, the media processing device to terminate the H.245 session between the second network and the media processing device based on H. 248 protocol further comprises:
transmitting (S402; S502; S601; S702), by the media control device having the interoperation function, one instruction message based on H.245 protocol, wherein the instruction message carries information of instructing the media processing device to terminate the H.245 session.

8. The method of claim 7, **characterized in that,** the process of terminating the H.245 session by the media processing device according to the instruction and reporting information of the termination of the H.245 session to the media control device after confirming that the H.245 session has ended further comprises:
closing (S403) all channels in accordance with sequence of first closing a video channel, closing a data channel, and lastly closing an audio channel after the media processing device receives the instruction message carrying the information of terminating the H.245 session; transmitting an end session command, ESC, message to a H.245 session endpoint in the second network after closing all the channels and waiting for the ESC message from the H.245 session endpoint in the second network;
confirming (S405) that the H.245 session has ended after the media processing device has closed all the channels, transmitted the ESC message to the H.245 session endpoint in the second network and received the ESC message transmitted from an opposite end of the session; and reporting information of the termination of the H.245 session to the media control device.

9. The method of claim 5 or 6, **characterized in that,** the process of instructing, by the media control device having the interoperation function, the media processing device to terminate the H.245 session between the second network and the media processing device based on H. 248 protocol further comprises:
instructing, by the media control device having the interoperation function, the media processing device to close all channels by transmitting a first instruction message carrying information of closing a specified channel based on H. 248 protocol; transmitting a second instruction message instructing the media processing device to transmit an end sessioncommand, ESC, message to the H.245 session endpoint in the second network after all the channels have been closed.

10. The method of claim 9, **characterized in that,** the process of instructing, by the media control device having the interoperation function, the media processing device to close all the channels by transmitting the first instruction message carrying information of closing a specified logic channel based on H. 248 protocol further comprises:
transmitting, by the media control device having the interoperation function, one or more further instruction message(s) based on H. 248 protocol when a video channel exists, wherein the further instruction message carries information o closing one or more specified video channel(s); transmitting again one or more further instruction message(s) based on H. 248 protocol when a data channel exists, wherein the further instruction message carries information of closing one or more specified data channel(s); transmitting again one or more further instruction message(s) based on H. 248 protocol when an audio channel exists, wherein the further instruction message carries information of closing one or more specified audio channel(s).

11. The method of claim 9, **characterized in that,** the process of terminating the H.245 session by the media processing device according to the instruction and reporting information of termination of the H.245 session to the media control device after confirming that the H.245 session has ended further comprises:
closing the specified video channel, next closing the specified data channel and then closing the specified audio channel after the media processing device receives the first instruction message transmitted from the media control device; and lastly transmitting the message to the H.245 session endpoint in the second network;
confirming that the H.245 session has ended after the media processing device has closed all the channels, transmitted an end session command, ESC, message to the H.245 session endpoint and received a second end session command, ESC, message transmitted from an opposite end of the session; and reporting information of the termination of the H.245 session to the media control device.

12. A media control device for interworking multimedia services between a first network which does not employ H.245 protocol to control media streams and a second network which employs H.245 protocol to control media streams, **characterized in** comprising:
a first H.245 session end unit, configured to initiate a procedure of terminating an H.245 session between the second network and a media processing unit based on the H.245 protocol when call release is caused by side of the first network or one of the devices having an interoperation function, and configured to terminate the H.245 session by relaying signalings resulting from the interaction with a H.245 session endpoint in the second network;
a first call release unit, configured to instruct a network side which has not released the call to release the call after confirming that the first H.245 session end unit has terminated the H.245 session, and configured to release corresponding bearer on the media processing unit and delete the corresponding session endpoint.

13. A system for releasing call during the interoperation of the multimedia services in a bearer independent network, comprising a first network which does not employ H.245 protocol to control media streams, a second network which employs the H.245 protocol to control media streams, and a media control device according to claim 12 and a media processing device that have interoperation function, wherein one of the devices having the interoperation function is configured to implement the interoperation of the multimedia services between the first network and the second network.

14. A media processing device adapted for communicating with a media control device based on H. 248 protocol, **characterized in** comprising:
an H.245 session end unit, configured to first close specified video channels, next close specified data channels and then close specified audio channels according to an instruction from the media control device; and configured to lastly transmit an End Session Command, ESC, message to a H.245 session endpoint in the second network and wait for the ESC message transmitted from the H.245 session endpoint;
an information reporting unit, configured to confirm the termination of a H.245 session and report the information of the termination of the H.245 session to the media control device after the H.245 session end unit has closed all the channels, has transmitted the ESC message to the H.245 session endpoint and has received the ESC message from an opposite end of the session.

## Patentansprüche

1. Verfahren zum Freigeben einer Verbindung während der Zusammenarbeit von Multimediadiensten in einem trägerunabhängigen Netzwerk, wobei ein erstes Netzwerk, das kein H.245-Protokoll einsetzt, um einen Medienstrom zu steuern, und ein zweites Netzwerk, das das H.245-Protokoll einsetzt, um den Medienstrom zu steuern, Multimediadienste mittels einer Mediensteuervorrichtung und einer Medienverarbeitungsvorrichtung ausführen, die eine Zusammenarbeitsfunktionalität aufweisen, wobei das Verfahren **dadurch gekennzeichnet ist, dass** es Folgendes umfasst:
Beenden (S102; S201; S302; S403; S503; S602; S703) einer H.245-Sitzung zwischen dem zweiten Netzwerk und der Medienverarbeitungsvorrichtung mittels der Mediensteuervorrichtung und der Medienverarbeitungsvorrichtung, die eine Zusammenarbeitsfunktion aufweisen, wenn eine Verbindungsfreigabe seitens des ersten Netzwerks oder einer der Vorrichtungen bewirkt wird, die die Zusammenarbeitsfunktion aufweisen;
Anweisen (S105; S205; S306; S407; S511; S607; S708) durch die Mediensteuervorrichtung des Netzwerks, das die Verbindung nicht freigegeben hat, die Verbindung freizugeben, Freigeben eines entsprechenden Trägers an der Medienverarbeitungsvorrichtung und Löschen eines entsprechenden Sitzungsendpunkts nach dem Bestätigen, dass die H.245-Sitzung beendet ist;
wobei eine Vorrichtung, die die Zusammenarbeitsfunktion aufweist, betriebsfähig ist, die Zusammenarbeit der Multimediadienste zwischen dem ersten Netzwerk und dem zweiten Netzwerk zu implementieren.

2. Verfahren nach Anspruch 1, **dadurch gekennzeichnet, dass** es ferner Folgendes umfasst:
Einleiten (S 103) durch die Mediensteuervorrichtung, die die Zusammenarbeitsfunktion aufweist, einer Prozedur zum Beenden der H.245-Sitzung zwischen dem zweiten Netzwerk und der Medienverarbeitungsvorrichtung beruhend auf dem H.245-Protokoll, wenn die Verbindungsfreigabe durch das erste Netzwerk aufgerufen wird, das die Verbindungsfreigabe einleitet;
Beenden der H.245-Sitzung durch die Medienverarbeitungsvorrichtung, die Signalisierungen weiterleitet, die von der Wechselwirkung mit einem H.245-Sitzungsendpunkt im zweiten Netzwerk herrührten;
Anweisen (S 104) des zweiten Netzwerks, die Verbindung freizugeben, Freigeben des Trägers an der Medienverarbeitungsvorrichtung und Löschen des entsprechenden Sitzungsendpunkts nach dem Bestätigen, dass die H.245-Sitzung beendet ist.

3. Verfahren nach Anspruch 1, **dadurch gekennzeichnet, dass** es ferner Folgendes umfasst:
Einleiten (S201;S302) durch die Mediensteuervorrichtung, die die Zusammenarbeitsfunktion aufweist, einer Prozedur zum Beenden der H.245-Sitzung zwischen dem zweiten Netzwerk und der Medienverarbeitungsvorrichtung beruhend auf dem H.245-Protokoll, wenn die Verbindungsfreigabe durch die Mediensteuervorrichtung, die die Verbindungsfreigabe einleitet, oder die Medienverarbeitungsvorrichtung bewirkt wird, die die Freigabe des Trägers der Seite des ersten Netzwerks meldet;
Beenden (S202) der H.245-Sitzung durch die Medienverarbeitungsvorrichtung, die Signalisierungen weiterleitet, die von der Wechselwirkung mit einem H.245-Sitzungsendpunkt im zweiten Netzwerk herrührten;
Anweisen (S203; S204) des ersten Netzwerks und des zweiten Netzwerks, die Verbindung freizugeben, Freigeben des Trägers an der Medienverarbeitungsvorrichtung und Löschen des entsprechenden Sitzungsendpunkts nach dem Bestätigen, dass die H.245-Sitzung beendet ist.

4. Verfahren nach Anspruch 2 oder 3, **dadurch gekennzeichnet, dass** der Prozess des Einleitens durch die Mediensteuervorrichtung, die die Zusammenarbeitsfunktion aufweist, einer Prozedur zum Beenden der H.245-Sitzung zwischen dem zweiten Netzwerk und der Medienverarbeitungsvorrichtung beruhend auf dem H.245-Protokoll und des Beendens der H.245-Sitzung durch die Medienverarbeitungsvorrichtung, die Signalisierungen weiterleitet, die von der Wechselwirkung mit einem H.245-Sitzungsendpunkt im zweiten Netzwerk herrührten, ferner Folgendes umfasst:
Senden (S201;S302) durch die Mediensteuervorrichtung, die eine Zusammenarbeitsfunktion aufweist, einer oder mehrere Meldungen des Schließens eines Kanals beruhend auf dem H.245-Protokoll; Weiterleiten durch die Medienverarbeitungsvorrichtung der von der Mediensteuervorrichtung gesendeten Meldungen an den H.245-Sitzungsendpunkt im zweiten Netzwerk; nach dem Empfangen einer Antwort vom H.245-Sitzungsendpunkt, Senden einer Sitzungsbeendigungsbefehls-, ESC-, Meldung; Weiterleiten durch die Medienverarbeitungsvorrichtung der ESC-Meldung an den H.245-Sitzungsendpunkt im zweiten Netzwerk;
Bestimmen (S203; S304) durch die Mediensteuervorrichtung, dass die H.245-Sitzung beendet ist, wenn die Mediensteuervorrichtung eine ESC-Meldung vom H.245-Sitzungsendpunkt im zweiten Netzwerk empfängt.

5. Verfahren nach Anspruch 1, **dadurch gekennzeichnet, dass** es ferner Folgendes umfasst:
Anweisen (S402; S502) durch die Mediensteuervorrichtung, die die Zusammenarbeitsfunktion aufweist, der Medienverarbeitungsvorrichtung, die H.245-Sitzung zwischen dem zweiten Netzwerk und der Medienverarbeitungsvorrichtung zu beenden, beruhend auf dem H.248-Protokoll, wenn die Verbindungsfreigabe durch die Seite des ersten Netzwerks bewirkt wird, das die Verbindungsfreigabe einleitet;
Beenden (S405; S509) der H.245-Sitzung durch die Medienverarbeitungsvorrichtung gemäß der Anweisung und Melden der Informationen der Beendigung der H.245-Sitzung an die Mediensteuervorrichtung nach dem Bestätigen, dass die H.245-Sitzung beendet ist;
Anweisen (S406; S510) des zweiten Netzwerks, die Verbindung freizugeben, und Freigeben des Trägers an der Medienverarbeitungsvorrichtung und Löschen des entsprechenden Sitzungsendpunkts, nachdem die Mediensteuervorrichtung die gemeldeten Informationen erhält.

6. Verfahren nach Anspruch 1, **dadurch gekennzeichnet, dass** es ferner Folgendes umfasst:
Anweisen (S601; S702) durch die Mediensteuervorrichtung, die die Zusammenarbeitsfunktion aufweist, der Medienverarbeitungsvorrichtung, die H.245-Sitzung zwischen dem zweiten Netzwerk und der Medienverarbeitungsvorrichtung zu beenden, beruhend auf dem H.248-Protokoll, wenn die Verbindungsfreigabe durch eine Mediensteuervorrichtung, die die Verbindungsfreigabe einleitet, oder die Medienverarbeitungsvorrichtung bewirkt wird, die die Freigabe des Trägers der Seite des ersten Netzwerks meldet,
Beenden (S602; S703) der H.245-Sitzung durch die Medienverarbeitungsvorrichtung gemäß der Anweisung und Melden der Informationen der Beendigung der H.245-Sitzung an die Mediensteuervorrichtung nach dem Bestätigen, dass die H.245-Sitzung beendet ist;
Anweisen (S605; S606; S706; S707) des ersten Netzwerks und des zweiten Netzwerks, die Verbindung freizugeben, Freigeben des Trägers an der Medienverarbeitungsvorrichtung und Löschen des entsprechenden Sitzungsendpunkts, nachdem die Mediensteuervorrichtung gemeldete Informationen erhält.

7. Verfahren nach Anspruch 5 oder 6, **dadurch gekennzeichnet, dass** der Prozess des Anweisens durch die Mediensteuervorrichtung, die die Zusammenarbeitsfunktion aufweist, der Medienverarbeitungsvorrichtung, die H.245-Sitzung zwischen dem zweiten Netzwerk und der Medienverarbeitungsvorrichtung zu beenden, beruhend auf dem H.248-Protokoll, ferner Folgendes umfasst:
Senden (S402; S502; S601; S702) durch die Mediensteuervorrichtung, die die Zusammenarbeitsfunktion aufweist, einer Anweisungsmeldung beruhend auf dem H.245-Protokoll, wobei die Anweisungsmeldung Informationen zum Anweisen der Medienverarbeitungsvorrichtung überträgt, die H.245-Sitzung zu beenden.

8. Verfahren nach Anspruch 7, **dadurch gekennzeichnet, dass** der Prozess des Beendens der H.245-Sitzung durch die Medienverarbeitungsvorrichtung gemäß der Anweisung und des Meldens von Informationen der Beendigung der H.245-Sitzung an die Mediensteuervorrichtung nach dem Bestätigen, dass die H.245-Sitzung beendet ist, ferner Folgendes umfasst:
Schließen (S403) aller Kanäle gemäß einer Abfolge des zuerst Schließens eines Videokanals, Schließen eines Datenkanals und zuletzt Schließens eines Audiokanals, nachdem die Medienverarbeitungsvorrichtung die Anweisungsmeldung empfängt, die die Informationen zum Beenden der H.245-Sitzung überträgt; Senden einer Sitzungsbeendigungsbefehls-, ESC-, Meldung an einen H.245-Sitzungsendpunkt im zweiten Netzwerk nach dem Schließen aller Kanäle und Warten auf die ESC-Meldung vom H.245-Sitzungsendpunkt im zweiten Netzwerk;
Bestätigen (S405), dass die H.245-Sitzung beendet ist, nachdem die Medienverarbeitungsvorrichtung alle Kanäle geschlossen hat, die ESC-Meldung an den H.245-Sitzungsendpunkt im zweiten Netzwerk gesendet hat und die von einem gegenüberliegenden Ende der Sitzung gesendete ESC-Meldung empfangen hat; und Melden von Informationen der Beendigung der H.245-Sitzung an die Mediensteuervorrichtung.

9. Verfahren nach Anspruch 5 oder 6, **dadurch gekennzeichnet, dass** der Prozess des Anweisens durch die Mediensteuervorrichtung, die die Zusammenarbeitsfunktion aufweist, der Medienverarbeitungsvorrichtung, die H.245-Sitzung zwischen dem zweiten Netzwerk und der Medienverarbeitungsvorrichtung zu beenden, beruhend auf dem H.248-Protokoll, ferner Folgendes umfasst:
Anweisen durch die Mediensteuervorrichtung, die die Zusammenarbeitsfunktion aufweist, der Medienverarbeitungsvorrichtung, alle Kanäle zu schließen, durch Senden einer ersten Anweisungsmeldung, die Informationen zum Schließen eines spezifizierten Kanals überträgt, beruhend auf dem H.248-Protokoll; Senden einer zweiten Anweisungsmeldung, die die Medienverarbeitungsvorrichtung anweist, eine Sitzungsbeendigungsbefehls-, ESC-, Meldung an den H.245-Sitzungsendpunkt im zweiten Netzwerk zu senden, nachdem alle Kanäle geschlossen worden sind.

10. Verfahren nach Anspruch 9, **dadurch gekennzeichnet, dass** der Prozess des Anweisens durch die Mediensteuervorrichtung, die die Zusammenarbeitsfunktion aufweist, der Medienverarbeitungsvorrichtung, alle Kanäle zu schließen, durch Senden der ersten Anweisungsmeldung, die Informationen zum Schließen eines spezifizierten logischen Kanals überträgt, beruhend auf dem H.248-Protokoll, ferner Folgendes umfasst:
Senden durch die Mediensteuervorrichtung, die die Zusammenarbeitsfunktion aufweist, einer oder mehrerer weiterer Anweisungsmeldung(en) beruhend auf dem H.248-Protokoll, wenn ein Videokanal vorhanden ist, wobei die weitere Anweisungsmeldung Informationen zum Schließen eines spezifizierten Videokanals oder mehrerer spezifizierter Videokanäle überträgt; erneutes Senden einer oder mehrerer Anweisungsmeldung(en) beruhend auf dem H.248-Protokoll, wenn ein Datenkanal vorhanden ist, wobei die weitere Anweisungsmeldung Informationen zum Schließen eines spezifizierten Datenkanals oder mehrerer spezifizierter Datenkanäle überträgt; erneutes Senden eines oder mehrerer weiterer Anweisungsmeldung(en) beruhend auf dem H.248-Protokoll, wenn ein Audiokanal vorhanden ist, wobei die weitere Anweisungsmeldung Informationen zum Schließen eines spezifizierten Audiokanals oder mehrerer spezifizierter Audiokanäle überträgt.

11. Verfahren nach Anspruch 9, **dadurch gekennzeichnet, dass** der Prozess des Beendens der H.245-Sitzung durch die Medienverarbeitungsvorrichtung gemäß der Anweisung und des Meldens von Informationen der Beendigung der H.245-Sitzung an die Mediensteuervorrichtung nach dem Bestätigen, dass die H.245-Sitzung beendet ist, ferner Folgendes umfasst:
Schließen des spezifizierten Videokanals, als Nächstes Schließen des spezifizierten Datenkanals und dann Schließen des spezifizierten Audiokanals, nachdem die Medienverarbeitungsvorrichtung die von der Mediensteuervorrichtung gesendete erste Anweisungsmeldung empfängt, und zuletzt Senden der Sitzungsbeendigungsbefehls-, ESC-, Meldung an den H.245-Sitzungsendpunkt im zweiten Netzwerk;
Bestätigen, dass die H.245-Sitzung beendet ist, nachdem die Medienverarbeitungsvorrichtung alle Kanäle geschlossen hat, eine Sitzungsbeendigungsbefehls-, ESC-, Meldung an den H.245-Sitzungsendpunkt gesendet hat und eine von einem gegenüberliegenden Ende der Sitzung gesendete zweite Sitzungsbeendigungsbefehls-, ESC-, Meldung empfangen hat; und Melden von Informationen der Beendigung der H.245-Sitzung an die Mediensteuervorrichtung.

12. Mediensteuervorrichtung zur Zusammenarbeit von Multimediadiensten zwischen einem ersten Netzwerk, das kein H.245-Protokoll einsetzt, um Medienströme zu steuern, und einem zweiten Netzwerk, das das H.245-Protokoll einsetzt, um Medienströme zu steuern, **dadurch gekennzeichnet, dass** sie Folgendes umfasst:
eine erste H.245-Sitzungsendeinheit, die konfiguriert ist, eine Prozedur zum Beenden einer H.245-Sitzung zwischen dem zweiten Netzwerk und einer Medienverarbeitungseinheit beruhend auf dem H.245-Protokoll einzuleiten, wenn seitens des ersten Netzwerks oder einer der Vorrichtungen, die eine Zusammenarbeitsfunktion aufweisen, eine Verbindungsfreigabe bewirkt wird, und die konfiguriert ist, die H.245-Sitzung durch Weiterleiten von Signalisierungen zu beenden, die von der Wechselwirkung mit einem H.245-Sitzungsendpunkt im zweiten Netzwerk herrühren;
eine erste Verbindungsfreigabeeinheit, die konfiguriert ist, eine Netzwerkseite, die die Verbindung nicht freigegeben hat, anzuweisen, die Verbindung freizugeben, nach dem Bestätigen, dass die erste H.245-Sitzungsendeinheit die H.245-Sitzung beendet hat, und die konfiguriert ist, einen entsprechenden Träger an der Medienverarbeitungseinheit freizugeben und den entsprechenden Sitzungsendpunkt zu löschen.

13. System zum Freigeben einer Verbindung während der Zusammenarbeit der Multimediadienste in einem trägerunabhängigen Netzwerk, das Folgendes umfasst:
ein erstes Netzwerk, das kein H.245-Protokoll einsetzt, um Medienströme zu steuern, ein zweites Netzwerk, das das H.245-Protokoll einsetzt, um Medienströme zu steuern, und eine Mediensteuervorrichtung nach Anspruch 12 und eine Medienverarbeitungsvorrichtung, die eine Zusammenarbeitsfunktion aufweisen, wobei eine der Vorrichtungen, die die Zusammenarbeitsfunktion aufweisen, konfiguriert ist, die Zusammenarbeit der Multimediadienste zwischen dem ersten Netzwerk und dem zweiten Netzwerk zu implementieren.

14. Medienverarbeitungsvorrichtung, die zum Kommunizieren mit einer Mediensteuervorrichtung beruhend auf dem H.248-Protokoll eingerichtet ist, **dadurch gekennzeichnet, dass** sie Folgendes umfasst:
eine H.245-Sitzungsendeinheit, die konfiguriert ist, gemäß einer Anweisung von der Mediensteuervorrichtung zuerst spezifizierte Videokanäle zu schließen, als Nächstes spezifizierte Datenkanäle zu schließen und dann spezifizierte Audiokanäle zu schließen; und die konfiguriert ist, zuletzt eine Sitzungsbeendigungsbefehls-, ESC-, Meldung an einen H.245-Sitzungsendpunkt im zweiten Netzwerk zu senden und auf die vom H.245-Sitzungsendpunkt gesendete ESC-Meldung zu warten;
eine Informationsmeldeeinheit, die konfiguriert ist, die Beendigung einer H.245-Sitzung zu bestätigen und die Informationen der Beendigung der H.245-Sitzung an die Mediensteuervorrichtung zu melden, nachdem die H.245-Sitzungsendeinheit alle Kanäle geschlossen hat, die ESC-Meldung an den H.245-Sitzungsendpunkt gesendet hat und die ESC-Meldung von einem gegenüberliegenden Ende der Sitzung empfangen hat.

## Revendications

1. Procédé pour libérer un appel au cours d'un interfonctionnement de services multimédia dans un réseau support indépendant, dans lequel un premier réseau qui n'emploie pas le protocole H.245 pour contrôler un flux de média et un second réseau qui emploie le protocole H.245 pour contrôler le flux de média dispensent des services multimédia en utilisant un dispositif de contrôle de média et un dispositif de traitement de média qui ont une fonctionnalité d'interfonctionnement, le procédé étant **caractérisé par** les étapes suivantes :
mettre fin (S102 ; S201 ; S302 ; S403 ; S503 ; S602 ; S703) à une session H.245 entre le second réseau et le dispositif de traitement de média en utilisant le dispositif de contrôle de média et le dispositif de traitement de média qui ont une fonction d'interfonctionnement lorsqu'une libération d'appel est provoquée par un côté du premier réseau ou l'un des dispositifs ayant la fonction d'interfonctionnement ;
donner pour instruction (S105 ; S205 ; S306 ; S407 ; S511 ; S607 ; S708), par le dispositif de contrôle de média, au réseau qui n'a pas libéré l'appel de libérer l'appel, libérer le support correspondant sur le dispositif de traitement de média et effacer un point de fin de session correspondant après confirmation que la session H.245 a pris fin ;
où un dispositif ayant la fonction d'interfonctionnement est utilisable pour mettre en oeuvre l'interfonctionnement des services multimédia entre le premier réseau et le second réseau.

2. Procédé selon la revendication 1, **caractérisé en ce qu'**il comprend en outre les étapes suivantes :
initier (S103), par le dispositif de contrôle de média ayant la fonction d'interfonctionnement, une procédure de clôture de la session H.245 entre le second réseau et le dispositif de traitement de média sur la base du protocole H.245 lorsque la libération d'appel est invoquée par le premier réseau initiant la libération d' appel ;
mettre fin à la session H.245, par le dispositif de traitement de média relayant des signalisations résultant de l'interaction avec un point de fin de session H.245 dans le second réseau ;
donner pour instruction (S104) au second réseau de libérer l'appel, libérer le support sur le dispositif de traitement de média et effacer le point de fin de session correspondant après confirmation que la session H.245 a pris fin.

3. Procédé selon la revendication 1, **caractérisé en ce qu'**il comprend en outre les étapes suivantes :
initier (S201 ; S302), par le dispositif de contrôle de média ayant la fonction d'interfonctionnement, une procédure de clôture de la session H.245 entre le second réseau et le dispositif de traitement de média sur la base du protocole H.245 lorsque la libération d'appel est provoquée par le dispositif de contrôle de média initiant la libération d'appel ou le dispositif de traitement de média rapportant la libération du support du côté du premier réseau ;
mettre fin (S202) à la session H.245, par le dispositif de traitement de média relayant des signalisations résultant de l'interaction avec un point de fin de session H.245 dans le second réseau ;
donner pour instruction (S203 ; S204) au premier réseau et au second réseau de libérer l'appel, libérer le support sur le dispositif de traitement de média et effacer le point de fin de session correspondant après confirmation que la session H.245 a pris fin.

4. Procédé selon la revendication 2 ou la revendication 3, **caractérisé en ce que** le processus d'initialisation, par le dispositif de contrôle de média ayant la fonction d'interfonctionnement, d'une procédure de clôture de la session H.245 entre le second réseau et le dispositif de traitement de média sur la base du protocole H.245 et de clôture de la session H.245, par le dispositif de traitement de média relayant des signalisations résultant de l'interaction avec un point de fin de session H.245 dans le second réseau, comprend en outre les étapes suivantes :
transmettre (S201 ; S302), par le dispositif de contrôle de média ayant une fonction d'interfonctionnement, un ou plusieurs messages de clôture de canal sur la base du protocole H.245 ; relayer, par le dispositif de traitement de média, les messages transmis depuis le dispositif de contrôle de média au point de fin de session H.245 dans le second réseau ; après réception d'une réponse du point de fin de session H.245, transmettre un message de commande de fin de session, ESC ; relayer, par le dispositif de traitement de média, le message ESC au point de fin de session H.245 dans le second réseau ;
déterminer (S203 ; S304), par le dispositif de contrôle de média, que la session H.245 est terminée lorsque le dispositif de contrôle de média reçoit un message ESC depuis le point de fin de session H.245 dans le second réseau.

5. Procédé selon la revendication 1, **caractérisé en ce qu'**il comprend en outre les étapes suivantes :
donner pour instruction (S402 ; S502), par le dispositif de contrôle de média ayant la fonction d'interfonctionnement, au dispositif de traitement de média de mettre fin à la session H.245 entre le second réseau et le dispositif de traitement de média sur la base du protocole H.248 lorsque la libération d'appel est provoquée par le côté du premier réseau initiant la libération d' appel ;
mettre fin (S405; S509) à la session H.245 par le dispositif de traitement de média conformément à l'instruction et rapporter les informations de clôture de la session H.245 au dispositif de contrôle de média après confirmation que la session H.245 a pris fin ;
donner pour instruction (S406 ; S510) au second réseau de libérer l'appel, et libérer le support sur le dispositif de traitement de média, et effacer le point de fin de session correspondant après que le dispositif de contrôle de média a reçu les informations rapportées.

6. Procédé selon la revendication 1, **caractérisé en ce qu'**il comprend en outre les étapes suivantes :
donner pour instruction (S601 ; S702), par le dispositif de contrôle de média ayant la fonction d'interfonctionnement, au dispositif de traitement de média de mettre fin à la session H.245 entre le second réseau et le dispositif de traitement de média sur la base du protocole H.248 lorsque la libération d'appel est provoquée par le dispositif de contrôle de média initiant la libération d'appel ou le dispositif de traitement de média rapportant la libération du support du côté du premier réseau ;
mettre fin (S602 ; S703) à la session H.245 par le dispositif de traitement de média conformément à l'instruction et rapporter les informations de clôture de la session H.245 au dispositif de contrôle de média après confirmation que la session H.245 a pris fin ;
donner pour instruction (S605 ; S606 ; S706 ; S707) au premier réseau et au second réseau de libérer l'appel, libérer le support sur le dispositif de traitement de média et effacer le point de fin de session correspondant après que le dispositif de contrôle de média a reçu les informations rapportées.

7. Procédé selon la revendication 5 ou la revendication 6, **caractérisé en ce que** le processus comprenant de donner pour instruction, par le dispositif de contrôle de média ayant la fonction d'interfonctionnement, au dispositif de traitement de média de clore la session H.245 entre le second réseau et le dispositif de traitement de média sur la base du protocole H.248 comprend en outre l'étape suivante :
transmettre (S402 ; S502 ; S601 ; S702), par le dispositif de contrôle de média ayant la fonction d'interfonctionnement, un message d'instruction sur la base du protocole H.245, où le message d'instruction transporte des informations comprenant de donner pour instruction au dispositif de traitement de média de clore la session H.245.

8. Procédé selon la revendication 7, **caractérisé en ce que** le processus comprenant de mettre fin à la session H.245 par le dispositif de traitement de média conformément à l'instruction et de rapporter des informations de clôture de la session H.245 au dispositif de contrôle de média après confirmation que la session H.245 a pris fin comprend en outre les étapes suivantes :
clore (S403) tous les canaux conformément à une séquence comprenant de tout d'abord clore un canal vidéo, clore un canal de données, et, enfin, clore un canal audio après que le dispositif de traitement de média a reçu le message d'instruction acheminant l'information de mettre fin à la session H.245 ; transmettre un message de commande de fin de session, ESC, à un point de fin de session H.245 dans le second réseau après la clôture de tous les canaux et attendre le message ESC provenant du point de fin de session H.245 dans le second réseau ;
confirmer (S405) que la session H.245 a pris fin après que le dispositif de traitement de média a clos tous les canaux, transmis le message ESC au point de fin de session H.245 dans le second réseau et reçu le message ESC transmis depuis une extrémité opposée de la session ; et rapporter une information de la clôture de la session H.245 au dispositif de contrôle de média.

9. Procédé selon la revendication 5 ou la revendication 6, **caractérisé en ce que** le processus comprenant de donner pour instruction, par le dispositif de contrôle de média ayant la fonction d'interfonctionnement, au dispositif de traitement de média de mettre fin à la session H.245 entre le second réseau et le dispositif de traitement de média sur la base du protocole H.248 comprend en outre les étapes suivantes :
donner pour instruction, par le dispositif de contrôle de média ayant la fonction d'interfonctionnement, au dispositif de traitement de média de clore tous les canaux en transmettant un premier message d'instruction acheminant des informations de clôture d'un canal spécifié sur la base du protocole H.248 ; transmettre un second message d'instruction donnant pour instruction au dispositif de traitement de média de transmettre un message de commande de fin de session, ESC, au point de fin de session H.245 dans le second réseau après que tous les canaux ont été clos.

10. Procédé selon la revendication 9, **caractérisé en ce que** le processus comprenant de donner pour instruction, par le dispositif de contrôle de média ayant la fonction d'interfonctionnement, au dispositif de traitement de média de clore tous les canaux en transmettant le premier message d'instruction acheminant des informations pour clore un canal logique spécifié sur la base du protocole H.248, comprend en outre les étapes suivantes :
transmettre, par le dispositif de contrôle de média ayant la fonction d'interfonctionnement, un ou plusieurs messages d'instruction supplémentaires sur la base du protocole H.248 lorsqu'un canal vidéo existe, où le message d'instruction supplémentaire achemine des informations pour clore un ou plusieurs canaux vidéo spécifiés ; transmettre à nouveau un ou plusieurs messages d'instruction supplémentaires basés sur le protocole H.248 lorsqu'un canal de données existe, où le message d'instruction supplémentaire achemine des informations pour clore un ou
plusieurs canaux de données spécifiés ; transmettre à nouveau un ou plusieurs messages d'instruction supplémentaires basés sur le protocole H.248 lorsqu'un canal audio existe, où le message d'instruction supplémentaire achemine des informations pour clore un ou plusieurs canaux audio spécifiés.

11. Procédé selon la revendication 9, **caractérisé en ce que** le processus comprenant de mettre fin à la session H.245 par le dispositif de traitement de média conformément à l'instruction et de rapporter des informations de clôture de la session H.245 au dispositif de contrôle de média après confirmation que la session H.245 a pris fin, comprend en outre les étapes suivantes :
clore le canal vidéo spécifié, clore ensuite le canal de données spécifié, puis clore le canal audio spécifié après que le dispositif de traitement de média a reçu le premier message d'instruction transmis depuis le dispositif de contrôle de média ; et, enfin, transmettre le message de commande de fin de session, ESC, au point de fin de session H.245 dans le second réseau ;
confirmer que la session H.245 a pris fin après que le dispositif de traitement de média a clos tous les canaux, transmis un message de commande de fin de session, ESC, au point de fin de session H.245 et reçu un second message de commande de fin de session, ESC, transmis depuis une extrémité opposée de la session ; et rapporter des informations de la clôture de la session H.245 au dispositif de contrôle de média.

12. Dispositif de contrôle de média pour faire interfonctionner des services multimédia entre un premier réseau qui n'emploie pas le protocole H.245 pour contrôler des flux de média et un second réseau qui emploie le protocole H.245 pour contrôler des flux de média, **caractérisé en ce qu'**il comprend :
une première unité de fin de session H.245, configurée pour initier une procédure de clôture d'une session H.245 entre le second réseau et une unité de traitement de média sur la base du protocole H.245 lorsqu'une libération d'appel est provoquée par un côté du premier réseau ou l'un des dispositifs ayant une fonction d'interfonctionnement, et configurée pour mettre fin à la session H.245 en relayant des signalisations résultant de l'interaction avec un point de fin de session H.245 dans le second réseau ;
une première unité de libération d'appel configurée pour donner pour instruction à un côté du réseau qui n'a pas libéré l'appel de libérer l'appel après confirmation que la première unité de fin de session H.245 a mis fin à la session H.245, et configurée pour libérer le support correspondant sur l'unité de traitement de média et effacer le point de fin de session correspondant.

13. Système pour libérer un appel pendant l'interfonctionnement des services multimédia dans un réseau support indépendant, comprenant un premier réseau qui n'emploie pas le protocole H.245 pour contrôler des flux de média, un second réseau qui emploie le protocole H.245 pour contrôler des flux de média, et un dispositif de contrôle de média conformément à la revendication 12 et un dispositif de traitement de média qui ont une fonction d'interfonctionnement, où l'un des dispositifs ayant la fonction d'interfonctionnement est configuré pour implémenter l'interfonctionnement des services multimédia entre le premier réseau et le second réseau.

14. Dispositif de traitement de média conçu pour communiquer avec un dispositif de contrôle de média sur la base du protocole H.248, **caractérisé en ce qu'**il comprend :
une unité de fin de session H.245, configurée pour tout d'abord clore des canaux vidéo spécifiés, puis clore des canaux de données spécifiés et, ensuite, clore des canaux audio spécifiés conformément à une instruction provenant du dispositif de contrôle de média ; et configurée pour enfin transmettre un message de commande de fin de session, ESC, à un point de fin de session H.245 dans le second réseau et attendre le message ESC transmis depuis le point de fin de session H.245 ;
une unité de rapport d'informations, configurée pour confirmer la clôture d'une session H.245 et rapporter les informations de clôture de la session H.245 au dispositif de contrôle de média après que l'unité de fin de session H.245 a clos tous les canaux, transmis le message ESC au point de fin de session H.245 et reçu le message ESC depuis une extrémité opposée de la session.
